# FASCICULE DE BREVET EUROPEEN

(11) **EP 2 497 601 B1**
(45) Date de publication et mention de la délivrance du brevet: **12.11.2014**
(21) Numéro de dépôt: 11305235.1
(22) Date de dépôt: 07.03.2011
(51) Int. Cl.: B24C 3/32, B24C 9/00

(54) **Système pour traiter une surface intérieure d'un conduit par projection de particules**
Behandlungsverfahren der inneren Oberfläche eines Leitungsrohrs durch Teilchenbeschuss
System for treating an inner surface of a conduit by spraying particles

(43) Date de publication de la demande: 12.09.2012
(73) Titulaire: Foure Lagadec, 76600 Le Havre (FR)
(72) Inventeur: Vulin, Daniel, 26100 Romans sur Isère (FR)
(74) Mandataire: Thinat, Michel

(56) Documents cités:
- WO-A1-94/20263
- WO-A2-91/18712
- CH-A5- 632 695
- US-A1- 2004 043 703

## Description

La présente invention concerne un système pour traiter une surface intérieure d'un conduit par projection de particules.

La technique de projection de particules sur la surface d'une pièce est utilisée principalement dans trois domaines, le premier étant le décalaminage et le nettoyage, le deuxième étant le durcissement superficiel de la pièce et le troisième étant la protection contre la corrosion. Les particules utilisées pour de telles opérations peuvent être des microbilles d'acier, de verre ou de céramique ou encore du sable. Dans la mesure où les particules n'agissent que sur une très faible profondeur de la pièce à traiter, en général entre quelques centièmes et quelques dixièmes de millimètre, la projection de particules n'entraîne pas de déformation de la pièce. De plus, la surface est traitée de manière plus régulière que cela ne pourrait être le cas avec des moyens mécaniques tels des brosses.

Ce dernier aspect est particulièrement intéressant lorsqu'il s'agit d'utiliser la technique de projection de particules pour le nettoyage de pièces difficilement accessibles, comme par exemple des citernes et des conduits.

Cependant, la technique de projection de particules implique la consommation de quantités assez importantes de particules, ce qui est particulièrement désavantageux lorsqu'il s'agit de nettoyer l'intérieur d'un conduit très long, ayant par exemple une longueur de plusieurs centaines de mètres, voire de quelques kilomètres. En effet, les avantages de la technique de projection de particules ne peuvent pas bien être mis à profit s'il faut sortir les moyens de projection du conduit très fréquemment pour débarrasser le conduit des particules utilisées et pour réapprovisionner les moyens de projection avec de nouvelles particules.

Aussi, le but de l'invention est de proposer un système qui permette, pendant son fonctionnement en projection, de recycler les particules utilisées, pour le moins partiellement.

Le document US2004-0043703 décrit un système selon le préambule de la revendication 1.

Le but de l'invention est atteint avec un système selon la revendication 1.

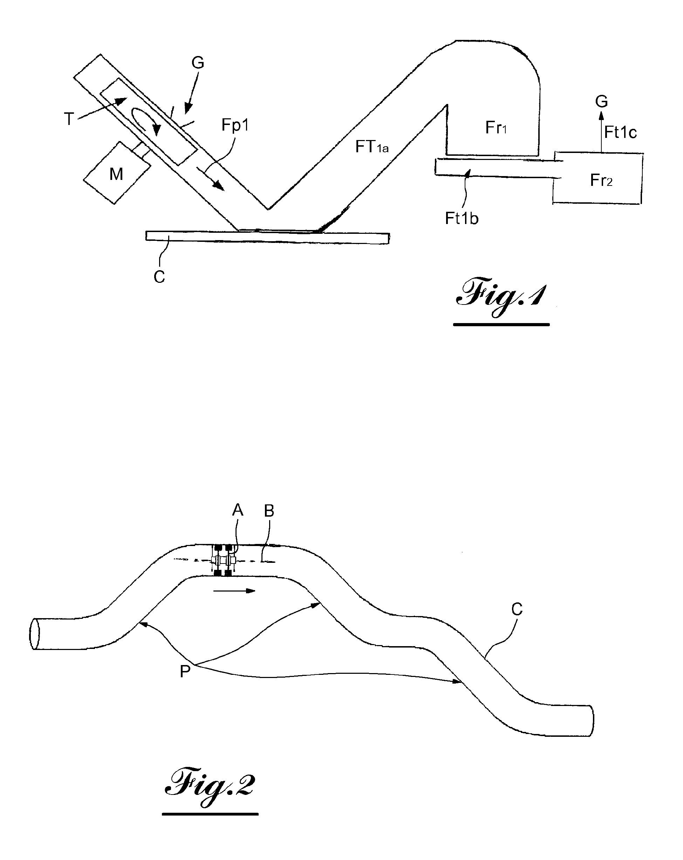

Le système de l'invention travaille selon le principe de fonctionnement représenté sur la figure 1 des dessins annexés. Des particules G, par exemple de la grenaille d'acier, sont projetées moyennant une turbine T sur la surface d'une pièce C, par exemple la surface intérieure d'un conduit. Lorsque les particules rebondissent, elles sont récupérées, recyclées et réutilisées. Aussi, le système de l'invention comprend des moyens permettant de réaliser les quatre fonctions suivantes :- une fonction de projection Fpi qui est mise en oeuvre par exemple par une tuyère pourvue d'une turbine T entraînée par un moteur M ou pourvue d'une source d'air comprimé, - une fonction de récupération Fr1 qui est mise en oeuvre au moyen d'un carter ayant une forme adaptée à la nature de la projection et qui a des dimensions appropriées pour pouvoir collecter les particules ainsi que les déchets dégagés par les particules,
- une fonction de reconditionnement Fr₂ qui est mise en oeuvre par exemple à l'aide de filtres permettant de séparer les particules des déchets, les déchets et les particules réutilisables, notamment nettoyées, étant collectés séparément, et
- une fonction de transport Ft₁, ici répartie en trois étapes Ft₁ₐ pour le transport des particules rebondissant vers des moyens de récupération (fonction Fr₁), une fonction FT_{1b} pour le transport des particules récupérées vers des moyens de nettoyage (fonction Fr₂) et une fonction Ft_{1c} pour le transport des particules nettoyées vers des moyens de stockage ou directement vers des moyens de projection, ce qui ferme le cycle d'utilisation de particules.

Le système de l'invention permet ainsi de projeter des particules sur la surface intérieure de pipelines ou de conduites forcées ayant des longueurs pouvant atteindre l'ordre de grandeur de 3000 mètres. Le diamètre des conduites pour lesquelles le système de l'invention est conçu, se situe généralement entre environ 1 m et environ 3 mètres. Toutefois, le système peut être adapté à des conduites ayant un diamètre inférieur à 1 mètre et aussi à des conduites ayant un diamètre supérieur à 3 mètres.

Par ailleurs, le système de l'invention est conçu de manière à pouvoir être déplacé non seulement à l'intérieur de conduits droits mais aussi à l'intérieur de conduits non droits, comme cela est représenté sur la figure 2 des dessins annexés. La figure 2 représente très schématiquement un système A de l'invention qui tourne autour d'un axe B et qui se déplace dans un conduit C qui doit être nettoyé à l'intérieur. Le conduit C comporte des tronçons horizontaux et des tronçons ayant une pente P. Les pentes P peuvent atteindre des valeurs, aussi bien en montée qu'en descente, allant jusqu'à 60%. De plus, le système de l'invention peut être utilisé à l'intérieur de conduits verticaux. Dans toutes ces applications, le système est déplacé à l'aide d'un treuil et les moteurs électriques nécessaires pour faire fonctionner les différents dispositifs du système sont alimentés par un câble électrique et non pas par une batterie pour limiter la masse du système. Il est toutefois néanmoins envisageable d'équiper le système de l'invention pour certaines applications avec des sources d'énergie électrique embarquées si la masse totale à mettre en rotation le permet et lorsque l'économie d'un treuil apporte un avantage.

La présente invention concerne également les caractéristiques:
- les moyens de récupération de particules comprennent autant de dispositifs de récupération que les moyens de projection de particules comprennent de dispositifs de projection ;
- le (ou chacun des) dispositif(s) de projection de particules forme avec le (ou avec un des) dispositif(s) de récupération de particules une unité constructive ;
- les moyens de recyclage des particules comprennent au moins un séparateur adapté pour pouvoir séparer les particules récupérées de matières enlevées par les particules ;
- les moyens de recyclage des particules comprennent des vis sans fin ;
- à chaque ensemble formé par un dispositif de projection de particules et un dispositif de récupération de particules est associé un séparateur adapté pour pouvoir séparer les particules récupérés de matières enlevées par les particules ;
- le système comprend au moins un bac intermédiaire de rétention de particules destinées à être réutilisées ;
- les moyens de recyclage des particules récupérées comprennent au moins une source de sous-pression ;
- le système comprend une trémie pour des particules à projeter et des moyens adaptés pour pouvoir assurer en permanence une position haute de la trémie ;
- le système comprend des moyens adaptés pour pouvoir maintenir constante la distance entre le (ou chacun des) dispositif(s) de projection de particules et la surface intérieure du conduit à traiter ;
- le système comprend un treuil adapté pour pouvoir déplacer le support mobile à l'intérieur du conduit à traiter.

D'autres caractéristiques, détails et avantages de la présente invention apparaîtront dans la description explicative qui va suivre faite en référence aux dessins schématiques annexés donnés uniquement à titre d'exemple illustrant trois modes de réalisation de l'invention et dans lesquels :
- la figure 1 représente schématiquement le principe de fonctionnement du système de l'invention,
- la figure 2 représente une utilisation typique du système de l'invention,
- la figure 3 représente une partie d'un système de l'invention, dans laquelle est mis en oeuvre le principe de la présente invention,
- les figures 4 et 5 représentent le système de l'invention selon un premier mode de réalisation, vu respectivement de l'un et de l'autre côté du système,
- la figure 6 représente les moyens de recyclage et les moyens de transport et de stockage du système des figures 4 et 5,
- la figure 7 représente le système de l'invention selon un deuxième mode de réalisation et
- la figure 8 représente le système de l'invention selon un troisième mode de réalisation.

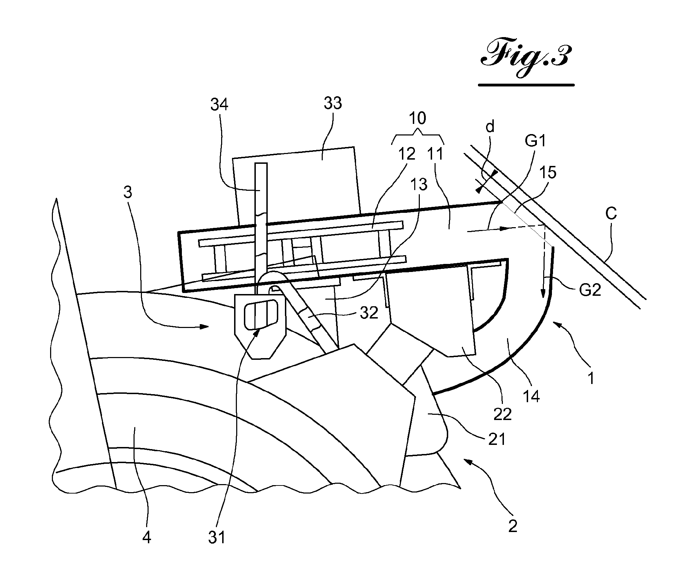

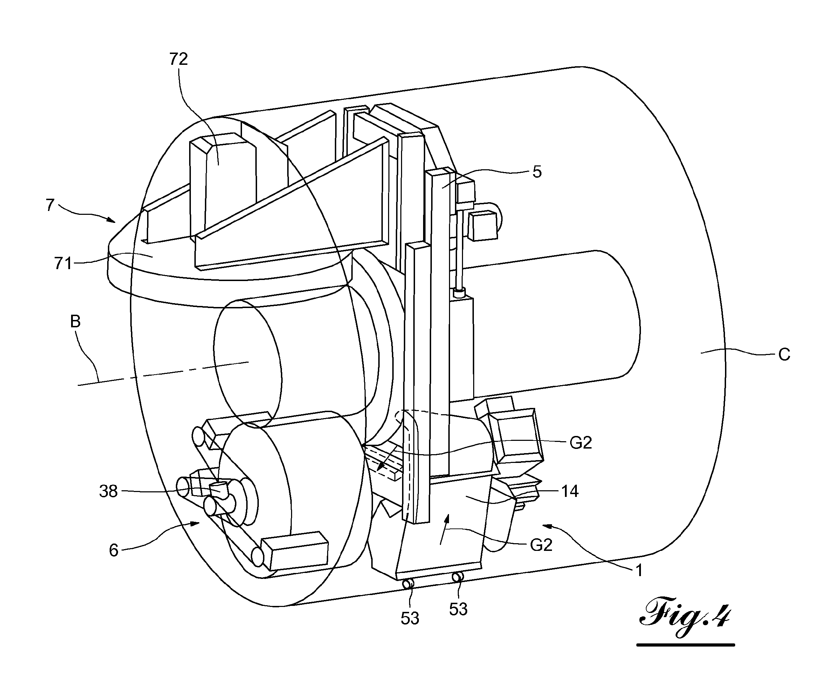

La figure 3 représente de manière très schématique les principaux éléments et dispositifs d'un système de l'invention, avec lesquels le principe de la présente invention est mis en oeuvre. Ces éléments et dispositifs comprennent une unité de travail 1 avec un dispositif de projection 10 de particules G et un tuyau de réception 14 qui fait partie de moyens de récupération 2, ainsi que des moyens de recyclage 3. Tous ces dispositifs et moyens sont montés sur un support mobile 4 avec lequel ils tournent ensemble autour d'un axe B indiqué sur la figure 4.

Le dispositif de projection 10 comprend une tuyère 11 et une turbine 12 entraînée moyennant un moteur électrique 13, la tuyère 11 ayant une ouverture 15 par laquelle les particules G sont projetées (flèche G1) contre la surface intérieure d'un conduit C. Le tuyau de réception 14 des moyens de récupération 2 sert à récupérer les particules rebondissant de la surface du conduit C et à les acheminer (flèche G2) vers un séparateur 21 adapté pour pouvoir séparer les particules G récupérées de poussières et autres matières enlevées par ces particules. Le tuyau de réception 14 partage l'ouverture 15 avec la tuyère 11. Ainsi, les particules projetées sortent et reviennent par la même ouverture 15 maintenue de la surface à traiter à une distance d de l'ordre de 10 millimètres. La distance d est déterminée en fonction de la nature des particules à projeter et de la vitesse avec laquelle les particules sont projetées.

Alors que les matières enlevées par les particules, autrement dit les déchets, sont collectées dans un bac à déchets 22, les particules récupérées et nettoyées sont acheminées vers un bac intermédiaire de rétention 31. Ensuite, les particules nettoyées sont acheminées vers une trémie 32 et sont tenues à disposition pour une réutilisation par le dispositif de projection 10.

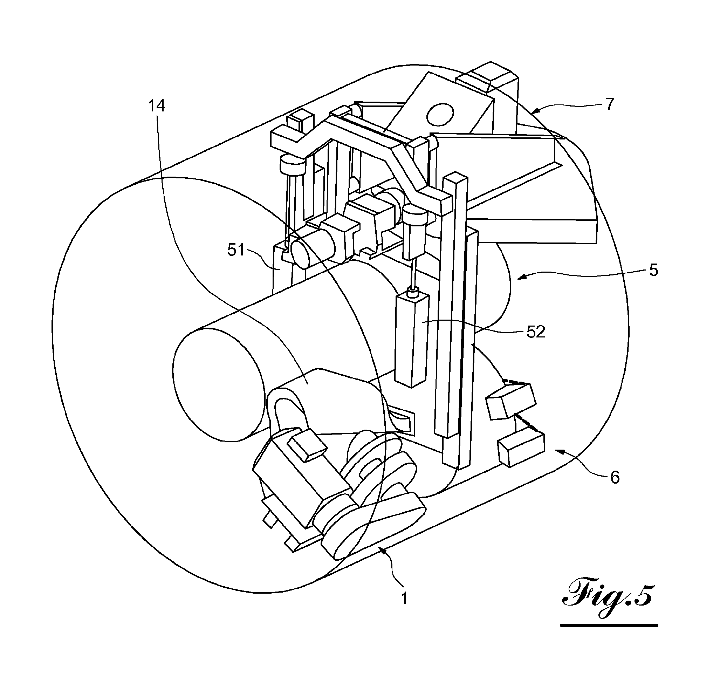

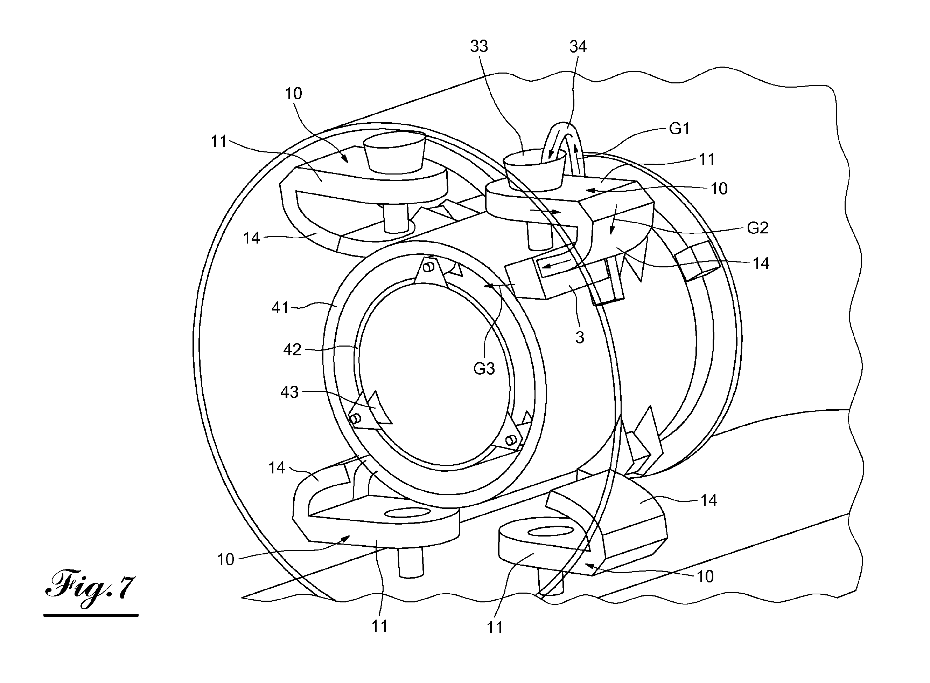

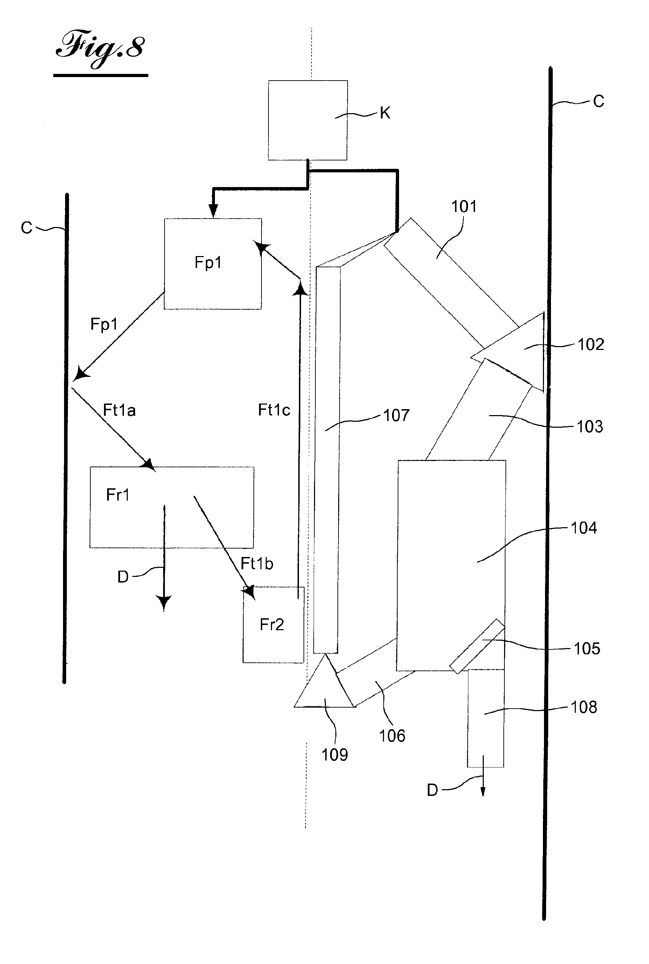

Le transport des particules nettoyées du séparateur 21 vers un bac intermédiaire de rétention 31, qui fait partie des moyens de recyclage 3, est effectué avec une première vis sans fin 32 et le transport des particules du bac intermédiaire de rétention 31 vers une trémie 33 est effectué à l'aide d'une seconde vis sans fin 34. La seconde vis sans fin 34 est entraînée par un moteur 34A disposé axialement sur la vis sans fin 34. Sur le plan pratique, comme cela sera visible aussi sur les figures 4 à 6 représentant un premier mode de réalisation d'un système de l'invention, et sur les figures 7 et 8 représentant respectivement un deuxième et un troisième mode de réalisation, la tuyère 11 du dispositif de projection 10 et le tuyau de réception 14 du dispositif de récupération forment avantageusement une unité constructive qui est soit réalisée en une seule pièce soit assemblée à partir de pièces ayant des formes complémentaires les unes aux autres.

Les figures 4 à 6 représentent un système pour traiter une surface intérieure d'un conduit par projection de particules selon un premier mode de réalisation de l'invention. Le système comprend, monté sur un support mobile 5, une unité de travail 1 réunissant un dispositif de projection 10 de particules G et le tuyau de réception 14 des moyens de récupération 2 de particules G, un tambour 6 avec des moyens de recyclage 3, ainsi qu'une source de sous-pression 7 avec un ventilateur d'aspiration 71 entraîné par un moteur 72.

Le support 5 comprend des vérins 51, 52 moyennant lesquels la hauteur du support 5 est adaptée de manière flexible au diamètre du conduit C dont la surface intérieure doit être traitée. Cette adaptation flexible est nécessaire pour deux raisons. La première en est que le dispositif de l'invention doit pouvoir traiter ladite surface sur 360°. Il faut donc adapter la hauteur du support 5 au diamètre nominal du conduit. La seconde raison en est que la corrosion, des inhomogénéités dues à la construction du conduit et bien d'autres faits requièrent que cette adaptation soit flexible pour éviter que le système soit bloqué à l'intérieur du conduit.

En outre, le système - généralement l'unité de travail 1 - est pourvu de rouleaux 53 garantissant la distance d constante entre l'unité de travail 1 et la surface intérieure du conduit C à traiter pendant toute la durée du traitement.

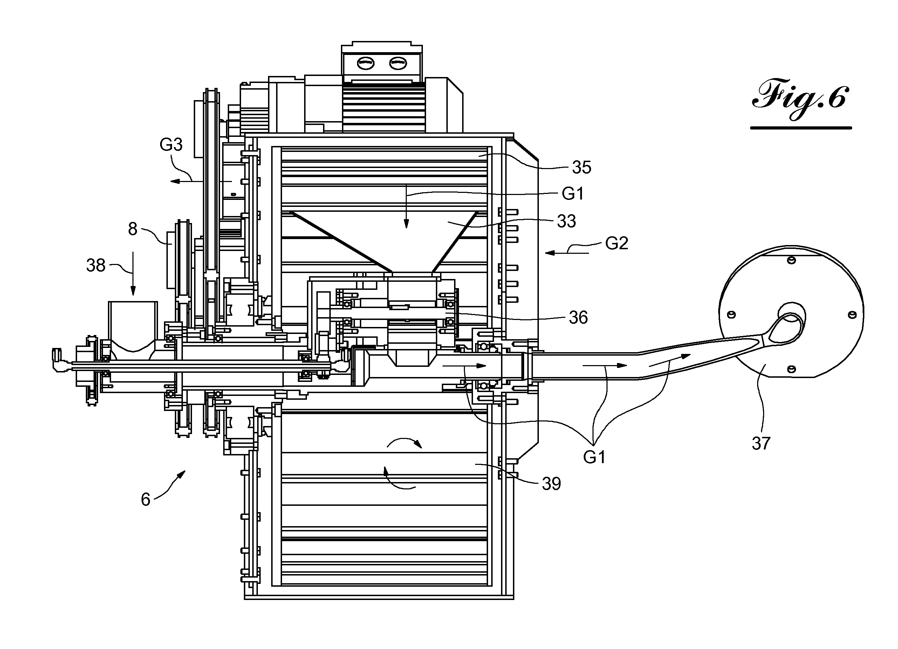

Comme cela est visible sur la figure 6, les moyens de recyclage 3 réunis dans le tambour 6 comprennent, conformément à ce qui a été déjà expliqué en relation à la figure 3, une trémie 33 et des moyens 8 adaptés pour pouvoir assurer en permanence une position haute de la trémie 33. Le tambour 6 comprend en outre, du côté entrée de la trémie 33, une pelle rotative 35 pour remplir la trémie 33 avec des particules G recyclées et, du côté sortie de la trémie 33, une vanne à palette 36 adaptée pour pouvoir doser la quantité de particules G qui doivent être acheminées vers le dispositif de projection 10 de l'unité de travail 1.

Sur la figure 6, le chemin des particules G est indiqué de la manière suivante : Des flèches G1 indiquent le chemin des particules G propres ou recyclées sortant de la vanne à palette 36 et qui sont dirigées vers une bride d'entrée 37 par laquelle les particules G sont injectées dans l'unité de travail 1. Les particules G sont ensuite projetées sur la surface à traiter. L'injection des particules G dans l'unité de travail 1 et leur projection sont effectuées à l'aide d'air forcé arrivant dans le tambour 6 par une entrée d'air 38.

Les particules G rebondissant de la surface à traiter du conduit C, qui entraînent avec elles les déchets, c'est-à-dire les poussières et autres matières enlevées de ladite surface, sont récupérées par le tuyau de récupération 14 (voir la figure 4) du système et acheminées suivant des flèches G2 vers le tambour 6 et plus particulièrement vers une enceinte 39 dans laquelle le mélange est collecté. Ce mélange de particules récupérées et de déchets est séparé dans l'enceinte 39 sous l'action aspirante de la source de sous-pression formée par le ventilateur aspirateur 71. Les déchets sortent du tambour 6 suivant des flèches G3 vers un collecteur de déchets.

La figure 7 montre un système de traitement par projection de particules G selon un deuxième mode de réalisation de l'invention. Ce mode de réalisation se distingue du premier mode de réalisation principalement par le fait que le système comprend quatre dispositifs de projection 10, quatre tuyaux de réception 14 et quatre moyens de recyclage 3. Pour ne pas surcharger la figure 7, celle-ci ne représente complètement qu'un seul de ces quatre ensembles de dispositifs, à savoir l'ensemble en haut à droite. L'ensemble de dispositifs situé en haut à gauche est représenté par l'unité de travail 1 et la trémie 33 correspondante et les deux ensembles inférieurs de dispositifs sont représentés uniquement par la pièce unitaire réunissant la tuyère 11 et le tuyau de réception 14. Le flux G1 des particules G, le flux G2 du mélange de particules et de déchets ainsi que le flux G3 des déchets seuls, c'est-à-dire après séparation des particules G, sont représentés par des flèches claires représentant les particules G et des flèches foncées représentant les déchets.

La figure 7 montre par ailleurs, en supplément par rapport à la représentation du premier mode de réalisation, que le support mobile 4 comprend un corps tubulaire extérieur 41 et un corps tubulaire intérieur 42 pourvu de rouleaux 43 par lesquels le corps cylindrique extérieur 41 est monté mobile en rotation par rapport au corps tubulaire intérieur 42. Le corps intérieur 42 est solidaire d'une structure de base (non représentée) moyennant laquelle le support mobile 4 est déplacé à l'intérieur d'un conduit à traiter.

Aussi bien le support mobile 4 selon le deuxième mode de réalisation de l'invention que le support mobile 5 selon le premier mode de réalisation sont équipés de rouleaux ou de roues (non-représentés) pour faciliter leur déplacement à l'intérieur d'un conduit. Le déplacement lui-même est effectué à l'aide d'un treuil qui est fixé à une extrémité du conduit C, ou à une extrémité d'un tronçon du conduit C, à traiter.

Alors que le système selon le premier mode de réalisation est conçu de façon que les différents dispositifs (sauf la trémie) tournent entièrement autour de l'axe B, le système selon le deuxième mode de réalisation est conçu de façon que les dispositifs de projection et les dispositifs de récupération des particules oscillent autour de l'axe B uniquement sur un secteur d'environ 90°, la surface entière à traiter de la conduite C étant ainsi repartie sur les quatre ensembles de dispositifs.

La figure 8 représente de manière très schématique un système de l'invention selon un troisième mode de réalisation. Ce mode de réalisation est adapté plus particulièrement au traitement de conduits ayant un diamètre inférieur à 1 mètre.

La figure 8 représente dans la partie gauche les différentes fonctions du système, telles qu'elles ont déjà été expliquée plus haut en référence à la figure 1, et utilise les mêmes références (Fp1 etc.). Les différentes fonctions sont placées approximativement symétriquement par rapport aux éléments et dispositifs correspondants dont la répartition physique dans le système est représentée sur la partie droite de la figure 8. L'entraînement des différents éléments et dispositifs, nécessaire au fonctionnement du système, vient d'un moteur K dessiné à cheval sur les deux parties de la figure 8.

Ainsi, le système selon ce troisième mode de réalisation comprend des buses d'injection 101 par lesquelles les particules G sont injectées (fonction Fp1) dans une chambre de grenaillage 102 pour être projetées sur la surface intérieure du conduit C. Les particules rebondissant de ladite surface, chargées de poussières et autres déchets de revêtement D, sont récupérées (fonction Ft1a) par un conduit d'évacuation 103 et collectées dans une chambre de séparation 104. Dans cette chambre 104, les particules G sont séparées (fonction Fr1) des déchets à l'aide d'une grille de séparation 105 avant d'être transportées (fonction Ftlb) vers une vanne doseuse 106 (fonction Fr2) et puis injectées (fonction Ft1c) dans un tube d'injection 107 et, à nouveau, par les buses d'injection 101, dans la chambre de grenaillage 102.

L'évacuation des déchets D est effectuée par un conduit d'évacuation 108 à partir de la chambre de séparation 104 et l'introduction des particules recyclées dans le tube 107 est effectuée par de l'air comprimé intervenant à une entrée d'air comprimé 109 située entre la vanne doseuse 106 et le tube 107.

## Revendications

1. Système adapté pour pouvoir traiter une surface intérieure d'un conduit (C) par projection de particules (G), le système comprenant une unité de travail (1) pourvu de moyens de projection de particules, les moyens de projection de particules comprenant au moins un dispositif de projection (10) de particules, et le système comprenant en outre des moyens de récupération (2) d'au moins une partie des particules (G) projetés et des moyens de recyclage (3) des particules (G) récupérés, **caractérisé en ce que** l'unité de travail (1) est pourvue de rouleaux (53) maintenant constante la distance (d) entre cette unité de travail (1) et la surface intérieure du conduit (C) à traiter, et **en ce que** l'unité de travail (1) est montée sur un support mobile (5) qui comporte des vérins (51, 52) d'adaptation flexible de la hauteur du support (5) porteur de l'unité de travail (1) par rapport à la surface intérieure du conduit (C).

2. Système selon la revendication 1, **caractérisé en ce que** les moyens de récupération (2) de particules comprennent autant de dispositifs de récupération (14) que les moyens de projection de particules comprennent de dispositifs de projection (10).

3. Système selon la revendication 2, **caractérisé en ce que** le (ou chacun des) dispositif(s) de projection (10) de particules forme avec le (ou avec un des) dispositif(s) de récupération (14) de particules une unité constructive (1).

4. Système selon l'une quelconque des revendications 1 à 3, **caractérisé en ce que** les moyens de recyclage (3) des particules comprennent au moins un séparateur (21) adapté pour pouvoir séparer les particules récupérées de matières enlevées par les particules.

5. Système selon la revendication 4, **caractérisé en ce qu'**à chaque ensemble formé par un dispositif de projection (10) de particules et un dispositif de récupération (14) de particules est associé un séparateur (21) adapté pour pouvoir séparer les particules récupérées de matières enlevées par les particules.

6. Système selon l'une quelconque des revendications 1 à 5, **caractérisé en ce qu'**il comprend au moins un bac intermédiaire de rétention (31) de particules destinées à être réutilisées.

7. Système selon l'une quelconque des revendications 1 à 6, **caractérisé en ce que** les moyens de recyclage (3) des particules récupérées comprennent au moins une source de sous-pression (7).

8. Système selon l'une quelconque des revendications 1 à 7, **caractérisé en ce qu'**il comprend une trémie (33) pour des particules à projeter et des moyens (35) adaptés pour pouvoir assurer en permanence une position haute de la trémie (33).

9. Système selon l'une quelconque des revendications 1 à 8, **caractérisé en ce qu'**il comprend un treuil adapté pour pouvoir déplacer le support mobile (4) à l'intérieur du conduit (C) à traiter.

## Patentansprüche

1. System zur Behandlung einer inneren Oberfläche eines Leitungsrohrs (C) durch Teilchenbeschuss, wobei das System eine Arbeitseinheit (1) umfasst, die mit Teilchenbeschussmitteln ausgestattet ist, wobei die Teilchenbeschussmittel mindestens eine Teilchenbeschussvorrichtung (10) umfassen, und das System ferner Rückgewinnungsmittel (2) mindestens eines Teils der Beschussteilchen (G) und Recyclingmittel (3) der zurückgewonnenen Teilchen (G) umfasst, **dadurch gekennzeichnet, dass** die Arbeitseinheit (1) mit Rollen (53) ausgestattet ist, die den Abstand (d) zwischen dieser Arbeitseinheit (1) und der inneren Oberfläche des zu behandelnden Leitungsrohrs (C) konstant halten, und dass die Arbeitseinheit (1) auf einem mobilen Träger (5) montiert ist, der Zylinder (51, 52) für die flexible Anpassung der Höhe des Trägers (5) der Arbeitseinheit (1) im Verhältnis zur inneren Oberfläche des Leitungsrohrs (C) aufweist.

2. System nach Anspruch 1, **dadurch gekennzeichnet, dass** die Teilchenrückgewinnungsmittel (2) so viele Rückgewinnungsvorrichtungen (14) umfassen wie die Teilchenbeschussmittel Beschussvorrichtungen (10) umfassen.

3. System nach Anspruch 2, **dadurch gekennzeichnet, dass** das (oder jedes der) Teilchenbeschussmittel (10) mit dem (oder mit einem der) Teilchenrückgewinnungsmittel (14) eine konstruktive Einheit (1) bildet.

4. System nach einem der Ansprüche 1 bis 3, **dadurch gekennzeichnet, dass** die Recyclingmittel (3) der Teilchen mindestens einen Separator (21) umfassen, der ausgebildet ist, um die zurückgewonnenen Teilchen von von den Teilchen abgetragenen Stoffen zu trennen.

5. System nach Anspruch 4, **dadurch gekennzeichnet, dass** jede Gruppe, die von einer Teilchenbeschussvorrichtung (10) und einer Teilchenrückgewinnungsvorrichtung (14) gebildet wird, einem Separator (21) zugeordnet ist, der ausgebildet ist, um die zurückgewonnenen Teilchen von von den Teilchen abgetragenen Stoffen zu trennen.

6. System nach einem der Ansprüche 1 bis 5, **dadurch gekennzeichnet, dass** es mindestens einen Zwischenrückhaltebehälter (31) für Teilchen umfasst, die zur Wiederverwendung bestimmt sind.

7. System nach einem der Ansprüche 1 bis 6, **dadurch gekennzeichnet, dass** die Recyclingmittel (3) der zurückgewonnenen Teilchen mindestens eine Unterdruckquelle (7) umfassen.

8. System nach einem der Ansprüche 1 bis 7, **dadurch gekennzeichnet, dass** es einen Trichter (33) für Beschussteilchen umfasst und Mittel (35), die ausgebildet sind, um ständig eine hohe Position des Trichters (33) sicherzustellen.□

9. System nach einem der Ansprüche 1 bis 8, **dadurch gekennzeichnet, dass** es eine Winde umfasst, die ausgebildet ist, um den mobilen Träger (4) innerhalb des zu behandelnden Leitungsrohrs (C) zu verlagern.

## Claims

1. A system adapted so as to be able to treat an inner surface of a conduit (C) by spraying particles (G), the system comprising a working unit (1) provided with means for spraying particles, the means for spraying particles comprising at least the one device (10) for spraying particles, and the system further comprising means (2) for recovering at least one portion of the sprayed particles (G) and means (3) for recycling the recovered particles (G), **characterized in that** the working unit (1) is provided with rollers (53) maintaining the distance (d) constant between this working unit (1) and the inner surface of the conduit (C) to be treated, and **in that** the working unit (1) is mounted on a movable support (5) which includes actuators (51, 52) for flexibly adapting the height of the support (5) bearing the working unit (1) relatively to the inner surface of the conduit (C).

2. The system according to claim 1, **characterized in that** the means (2) for recovering the particles comprise as many recovery devices (14) as the particle spraying means comprise spraying devices (10).

3. The system according to claim 2, **characterized in that** said (or each of the) device(s) (10) for spraying particles forms with said (or each of the) device(s) (14) for recovering particles, a constructive unit (1).

4. The system according to any of claims 1 to 3, **characterized in that** the means (3) for recycling the particles comprise at least one separator (21) adapted so as to be able to separate the recovered particles from materials removed by the particles.

5. The system according to claim 4, **characterized in that** with each set formed by a particle spraying device (10) and a particle recovery device (14) is associated a separator (21) adapted so as to be able to separate the recovered particles from materials removed by the particles.

6. The system according to any of claims 1 to 5, **characterized in that** it comprises at least one intermediate pan (31) for retaining particles intended to be reused.

7. The system according to any of claims 1 to 6, **characterized in that** the means (3) for recycling the recovered particles comprise at least one sub-pressurized source (7).

8. The system according to any of claims 1 to 7, **characterized in that** it comprises a hopper (33) for particles to be sprayed and adapted means (35) for being able to permanently ensure a high position of the hopper (33).

9. The system according to any of claims 1 to 8, **characterized in that** it comprises an adapted winch for being able to move the movable support (4) inside the conduit (C) to be treated.
